# EUROPÄISCHE PATENTSCHRIFT

(11) **EP 0 458 781 B1**
(45) Veröffentlichungstag und Bekanntmachung des Hinweises auf die Patenterteilung: **04.05.1994**
(21) Anmeldenummer: 89902232.1
(22) Anmeldetag: 17.02.1989
(51) Int. Cl.: G06F 11/00, H04L 29/14

(54) **VERFAHREN ZUR ÜBERWACHUNG EINES COMPUTER-NETZWERKS**
PROCESS FOR MONITORING A COMPUTER NETWORK
PROCEDE POUR SURVEILLER UN RESEAU INFORMATIQUE

(43) Veröffentlichungstag der Anmeldung: 04.12.1991
(73) Patentinhaber: ROBERT BOSCH GMBH, 70442 Stuttgart (DE)
(72) Erfinder: BÜHREN, Harald, D-7580 Bühl (DE); KLUMPP, Bernd, D-7598 Lauf (DE); PREIS, Karl-Heinrich, D-7582 Bühlertal (DE)
(86) Internationale Anmeldenummer: DE8900090
(87) Internationale Veröffentlichungsnummer: WO9009631

(56) Entgegenhaltungen:
- GB-A- 2 082 355
- US-A- 4 245 344
- Microprocessing & Microprogramming, Band 21, Nr. 1-5, August 1987, North-Holland, (Amsterdam, NL), R.Vogt: "Improving the reliability of bus systems: fault isolation and fault tolerance", Seiten 333-338
- Telcom Report, Band 2, Beiheft "Digital-Übertragungstechnik",1979, (Passau,DE), C.Chaillié et al.: "Fehlererkennung und Fehlerlokalisierung in Datennetzen", Seiten 159-163

## Beschreibung

### Stand der Technik

Die Erfindung betrifft ein Verfahren zur Überwachung eines Computernetzwerks mit mindestens zwei über einen wenigstens zwei Leitungen umfassenden Datenbus verbundenen Teilnehmern nach der Gattung des Anspruchs 1.

Computer-Netzwerke werden immer häufiger eingesetzt, insbesondere auch im Kraftfahrzeugbau. Es sind sogenannte Controller-Area-Network-Schnittstellen (CAN-IC) bekannt, die als integrierte Schaltkreise ausgebildet sind. Die Verbindung der einzelnen Netzwerkteilnehmer erfolgt über einen Datenbus, der beispielsweise zwei Signalleitungen aufweist. Über diese Leitungen werden die Informationen der Teilnehmer gesendet. Jeder Ausfall einer der beiden Signalleitungen durch Kurzschluß nach Masse oder zur Spannungsversorgung oder eine Unterbrechung der Leitungen hat zur Folge, daß das gesamte Netzwerk zusammenbricht. Dies ist auch der Fall, wenn ein Kurzschluß zwischen den beiden Busleitungen eintritt, oder wenn einer der Teilnehmer defekt ist.

Die einzelnen Teilnehmer eines Netzwerks weisen außer dem CAN-IC eine sogenannte Busankopplung auf. Es handelt sich dabei um eine spezielle Beschaltung des CAN-IC's, durch die auf den Busleitungen auftretende Fehler erkannt werden sollen.

Derartige Systeme erlauben jedoch keine zentrale Überwachung der Funktion des Datenbusses oder der Funktion einzelner Teilnehmer eines Computer-Netzwerks.

Aus einem Beitrag von R. VOGT mit dem Titel "Improving the Reliability of Bus Systems: Fault Isolation and Fault Tolerance", veröffentlicht in "Microprocessing & Microprogramming", Band 21, Nr. 1 - 5, Aug. 1987, North Holland, Amsterdam (NL) Seiten 333 - 338 sind mehrere Möglichkeiten zur Überwachung eines Computer-Netzwerkes angegeben. Gemäß einem Vorschlag ist vorgesehen, daß definierte Testmuster zwischen den Teilnehmern übertragen werden. Ein anderer Vorschlag sieht eine Zurücksendung von bereits übertragenen Informationen vor. Ein weiterer Vorschlag betrifft das Anhängen von Prüf-Bytes an die zu übertragende Information. An anderer Stelle ist noch vorgeschlagen, daß jeder Teilnehmer eine "I'm alive"-message zu senden hat. In einem Ausführungsbeispiel eines Computernetzwerkes, das zwei getrennte Datenübertragungsbusse aufweist, ist vorgesehen, daß ein Vergleich der über die beiden getrennten Busse übertragenen Informationen stattfindet.

Der Erfindung liegt die Aufgabe zugrunde, ein einfaches Verfahren zum Erkennen von Hardwarefehlern und Funktionsstörungen einzelner, am Bus angeschlossener Teilnehmer zu erkennen, um geeignete Notlaufmaßnahmen ergreifen zu können.

Die Aufgabe wird durch die im Hauptanspruch angegebenen Merkmale gelöst.

### Vorteile der Erfindung

Das erfindungsgemäße Verfahren zur Überwachung eines Computer-Netzwerks mit den in Anspruch 1 genannten Merkmalen weist den Vorteil auf, daß das Verfahren unabhängig von der Zahl der am Busverkehr teilnehmenden Stationen eingesetzt werden kann. Das erfindungsgemäße Verfahren ist auch für die eingangs beschriebene Controller-Area-Network-Schnittstellen (CAN-IC) einsetzbar. Eine Anpassung der Notlauf-Maßnahmen an verschiedene Teilnehmerzahlen ist daher nicht erforderlich. Besonders wichtig ist es, daß bei den einzelnen Teilnehmern keine zusätzlichen Bauteile für die Durchführung des Verfahrens vorgesehen werden müssen. Überdies wird durch das erfindungsgemäße Verfahren der Datenbus nur äußerst wenig belastet.

Die Funktion des Datenbusses und/oder Teilnehmer erfolgt mittels Fehlererkennungssignalen mindestens eines Teilnehmers. Dabei wird zwischen externen Fehlererkennungssignalen, den sogenannten Watch-dog-Signalen, und internen Fehlererkennungssignalen, den CAN-Error-Interrupt-Signalen (CEI-Signale) unterschieden. Die externen Fehlererkennungssignale werden von einem Teilnehmer auf den Datenbus gegeben. Die am Busverkehr teilnehmenden Teilnehmer erwarten dieses Signal innerhalb eines vorgegebenen Zeitrasters. Teilnehmer-Interne Fehler werden mit Hilfe einer geeigneten Fehlererkennungseinrichtung erkannt und durch das CEI-Signal angezeigt.

Das erfindungsgemäße Verfahren zeichnet sich dadurch aus, daß in Abhängigkeit von den Fehlererkennungssignalen geeignete Notlauf-Maßnahmen ergriffen werden, wodurch ein Notbetrieb des Computer-Netzwerkes eingestellt wird. Die Notlauf-Maßnahmen werden abhängig von den auftretenden Fehlern variiert. Wenn nach Einstellung eines ersten Notlaufbetriebs weiter Fehler auftauchen, werden nachfolgende Notlauf-Maßnahmen ergriffen, um eine weitere Notlaufbetriebsart einzustellen. Erst wenn danach noch weitere Fehler auftreten, werden die von den Fehlern betroffenen Teilnehmer notfalls das gesamte Netzwerk abgeschaltet, es erfolgt ein sogenannter Bus-off.

Besonders bevorzugt wird ein Verfahren, bei dem der Bus-off-Betrieb wieder aufgehoben wird, wenn lediglich ein einzelner Teilnehmer defekt ist und daraufhin abgeschaltet wurde. Dieses Verfahren hat den Vorteil, daß man alle übrigen Teilnehmer wieder den normalen Zweidraht-Betrieb aufnehmen.

Schließlich wird ein Verfahren bevorzugt, bei dem die Fehlerüberwachung abgeschaltet werden kann, wenn durch einen Defekt des Teilnehmers, des Masters, der das externe Fehlererkennungssignal, das Watch-dog-Signal, abgibt, daß gesamte Netzwerk in den Bus-off-Betrieb übergegangen ist. Durch diese Maßnahme ist ein Notlaufbetrieb des Netzwerks möglich, auch wenn eine weitere Fehlerüberwachung dann nicht mehr möglich ist.

Weitere Vorteile und Ausführungsformen des Verfahrens ergeben sich aus den Unteransprüchen. Insbesondere wird deutlich, wie auf verschiedene im Computer-Netzwerk auftretende Fehler Notlauf-Maßnahmen ergriffen werden können.

### Zeichnung

Die Erfindung wird im folgenden anhand der Figuren näher erläutert. In einzelnen Diagrammen werden die von den Teilnehmern des Computer-Netzwerks abgegebenen Signale bzw. die aufgrund von Fehlern ergriffenen Notlauf-Maßnahmen erläutert. Es wird beispielhaft davon ausgegangen, daß das Computer-Netzwerk neben einem ein externes Fehlererkennungssignal (Watch-dog-Signal) abgebenden Teilnehmer (Master) zwei weitere Teilnehmer A und B aufweist. Das Verfahren ist jedoch keinesfalls auf ein Netzwerk mit drei Teilnehmern beschränkt.

Es zeigen:
Figur 1 die im Normalbetrieb auftretenden Signale;
Figuren 2 bis 4 den zeitlichen Ablauf der Signale bei der Reaktion auf einen stationären, globalen Fehler;
Figuren 5 bis 7 den zeitlichen Ablauf der Signale bei der Reaktion auf einen dynamischen, globalen Fehler;
Figuren 8 bis 10 die Signale bei der Reaktion auf einen stationären, lokalen, empfangsseitigen Fehler;
Figuren 11 und 12 die Signale bei der Reaktion auf einen lokalen, sendeseitigen, dynamischen Fehler;
Figur 13 die Signale bei der Handhabung eines Bus-off eines Teilnehmers;
Figur 14 ein Struktogramm, aus dem die bei einem im Ruhezustand eintretenden Fehler ergriffenen Maßnahmen ersichtlich sind;
Figur 15 die Signale bei der Reaktion auf einen Defekt des Masters und
Figur 16 ein Blockschaltbild eine Computer-Netzwerks, bei dem das Verfahren einsetzbar ist.

Das Fehlerüberwachungsverfahren soll anhand eines Computernetzes bzw. Multiplex-Systems, beschrieben werden, das mit einem Zwei-Draht-Bus ausgestattet ist. Die Daten werden über beide Busleitungen übertragen. Im Fehlerfall können die Informationen im EindrahtNotbetrieb weiter übertragen werden.

Es gibt rezesive und dominante Pegel auf den Leitungen des Datenbusses. Ein dominanter Pegel kann stets einen rezesiven Pegel überschreiben. Im stationären Betrieb, im Lehrlauf, ist der Bus im rezesiven Zustand, das heißt, die erste Datenleitung U+ befindet sich auf einem ersten vorgegebenen Pegel von beispielsweise 3,5V und die zweite Leitung U- des Datenbusses auf einem zweiten vorgegebenen Pegel von beispielsweise 1,5V. Ein dominanter Pegel liegt vor, wenn die erste Datenleitung das Potential der zweiten Leitung annimmt und die zweite Datenleitung das Potential der ersten Leitung.

Für die nachfolgende Beschreibung soll eine Klassifizierung der Fehler vorgenommen werden:
Als stationär wird ein Fehler bezeichnet, wenn er unabhängig vom Buszustand erkannt werden kann, also unabhängig davon, ob sich der Bus im Leerlauf befindet oder ob Daten übertragen werden.

Als dynamisch wird ein Fehler bezeichnet, wenn er nur während einer Datenübertragung erkannt werden kann.

Nach dem Kriterium der Fehlererkennung können die Fehler wie folgt unterschieden werden:
Bei einem stationären, globalen Fehler stellt sich auf den Busleitungen ist ein ständig dominater Pegel ein. Dieser Fehler wird unmittelbar nach seinem Auftreten von jedem CAN-Baustein eines Teilnehmers erkannt.

Bei einem dynamischen, globalen Fehler ist ständig ein rezesiver Pegel auf den Busleitungen. Dieser Fehler ist nicht im Leerlauf des Busses sondern erst bei einer Datenübertragung für alle Teilnehmer erkennbar.

Bei einem stationären, lokalen Fehler liest ein defekter Teilnehmer ständig einen dominanten Pegel ein. Dieser Fehler wird unmittelbar nach seinem Auftreten von dem betroffenen Teilnehmer erkannt.

Bei einem dynamischen, lokalen Fehler kann ein defekter Knoten sich selbst nicht korrekt einlesen. Die Teilnehmer, die mit einem Sende- und Empfangsteil ausgestattet sind, lesen ihre eigenen Informationen, die von ihrem Sendeteil auf den Datenbus abgegeben werden, zur Kontrolle selbst ein, das heißt, ein Teilnehmer liest seine eigenen vom Sendeteil abgegebenen Informationen über den Empfangsteil ein und kontrolliert diese. Ein dynamischer, lokaler Fehler wird daher erst bei einer Datenübertragung des defekten Teilnehmers, von diesem erkannt.

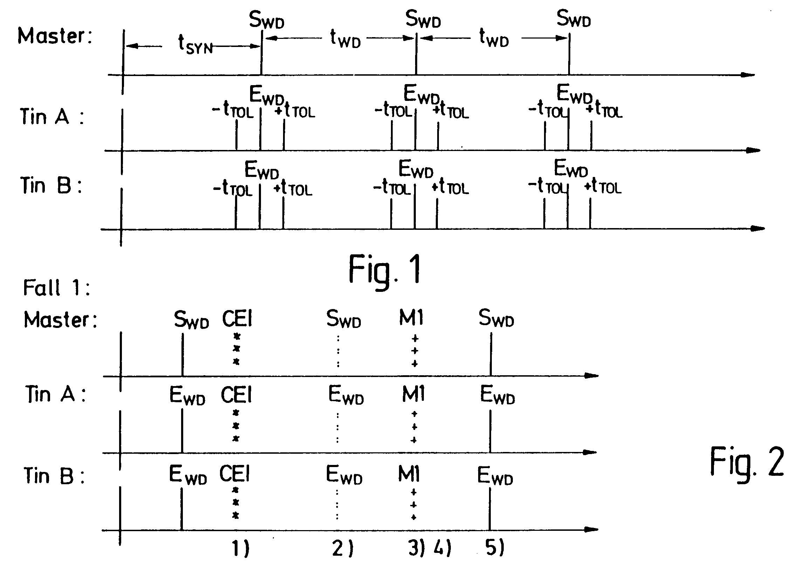

Anhand von Figur 1 wird der Normalbetrieb des Computer-Netzwerks erläutert.

Ein Teilnehmer, der beispielsweise auch die Busversorgung und die Überwachung des Pegels auf den Datenleitungen übernimmt, sendet zyklisch ein erstes externes Fehlererkennungssignal, eine Watch-Dog-Message. Das ausgesendete Signal wird mit S_{WD} bezeichnet. Ein derartiges Signal wird von dem Master nach einer Synchronisationszeit t_{SYN} ausgegeben, die dazu dient, daß die einzelnen Teilnehmer, hier Tln A und Tln B, eine Zeitsynchronisation vornehmen können.

Im Normalfall wird das Watch-dog-Signal S_{WD} von den Teilnehmern empfangen. Das empfangene Signal wird mit E_{WD} bezeichnet.

Im fehlerlosen Betrieb trifft das Watch-dog-Signal des Masters bei den Teilnehmern innerhalb eines Zeitfensters ein, das mit -tₜₒₗ und +tₜₒₗ bezeichnet ist. Das Watch-dog-Signal S_{WD} wird nach einer Zeit von t_{WD} wiederholt.

Fehlerfrei empfangene bzw. übertragene Signale werden mit einem durchgehenden senkrechten Strich bezeichnet.

Nun wird anhand der Figuren 2 bis 4 das Überwachungskonzept für einen stationären, globalen Fehler beschrieben, bei dem auf den Busleitungen ständig ein dominanter Pegel anliegt und der alle Teilnehmer des Computer-Netzwerks betrifft.

Aus Figur 2 ist ersichtlich, daß zunächst das vom Master abgegebene Watch-dog-Signal S_{WD} von den Teilnehmern A und B empfangen wurde. Danach trat der stationäre, globale Fehler ein. Dadurch wird bei jedem Teilnehmer eine Fehlererfassungseinrichtung aktiviert. Diese besteht beispielsweise in einem Fehlerzähler, der bei jedem Fehler inkrementiert wird, bis schließlich ein internes Fehlererkennungssignal, das CAN-Error-Interrupt-Signal (CEI) abgegeben wird. Nach jedem CEI werden die Fehlerzähler zurückgesetzt, indem der CAN-Baustein des Teilnehmers zurückgesetzt und dann wieder neu gestartet wird.

Das interne Fehlererkennungssignal CEI wird in Figur 2 zum Zeitpunkt 1) von allen Teilnehmern des Computer-Netzwerkes abgegeben. Nach dem Auftreten des CEI-Signals, das durch senkrecht übereinanderliegende Sternchen gekennzeichnet ist, wird das nächste Watch-dog-Signal S_{WD} abgewartet. Durch senkrecht übereinanderliegende Doppelpunkte ist dargestellt, daß das im vorgegebenen Zeitraster erwartete Signal nicht gesendet bzw. nicht empfangen werden kann. Im vorliegenden Fall kann durch den ständig dominanten Pegel keine Information über den Datenbus gesendet werden. Das Watch-dog-Signal S_{WD} kann also vom Master nicht abgegeben und daher von den Teilnehmern A und B nicht empfangen werden (E_{WD}). Aufgrund dieser Tatsache wird eine erste Notlauf-Maßnahme M1 eingeleitet.

Das Einleiten der Notlauf-Maßnahme ist durch senkrecht übereinanderliegende Pluszeichen angedeutet. Zum Zeitpunkt 3) wird die Notlauf-Maßnahme M1 eingeleitet. Zum Zeitpunkt 4) wird geprüft, ob weitere CEI Signale auftreten. Dies ist in Figur 2 nicht der Fall. Es ist erkennbar, daß zum Zeitpunkt 5) das Watch-dog-Signal S_{WD} vom Master abgegeben und von den Teilnehmern A und B empfangen werden kann. Es wird nunmehr die erste Notlaufbetriebsart, der Eindraht-Notlauf, aufrecht erhalten.

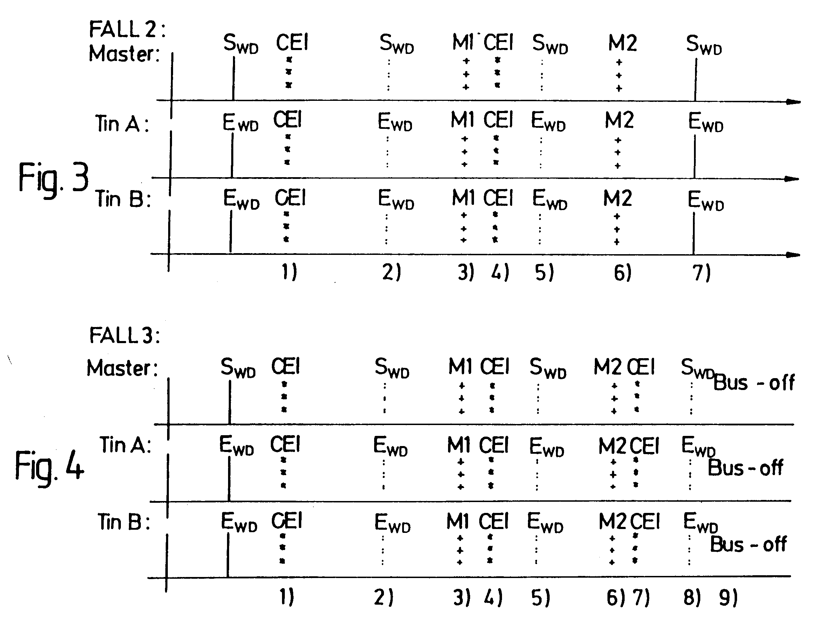

In Figur 3 ist ein Zeitdiagramm dargestellt, bei dem die zum Zeitpunkt 3) eingeleitete Notlauf-Maßnahme M1 nicht zur Fehlerbeseitigung geführt hat. Die Ereignisse zu den Zeitpunkten 1), 2) und 3) stimmen mit denen anhand von Figur 2 erläuterten überein. Auf ihre Beschreibung kann hier verzichtet werden.

In Figur 3 wird also zum Zeitpunkt 3) die erste Notlauf-Maßnahme M1 eingeleitet. Trotz dieser Maßnahme tritt zum Zeitpunkt 4) erneut ein internes Fehlererkennungssignal CEI bei allen Teilnehmern auf. Das heißt also, durch die Notmaßnahme wurde der Fehler nicht behoben. Daraufhin wird zum Zeitpunkt 6) die Notlauf-Maßnahme M2 eingeleitet. Die Notlauf-Maßnahme M1 wird zurückgenommen.

Zum Zeitpunkt 7) wird geprüft, ob weitere Fehlersignale CEI eintreffen. Dies ist in Figur 3 nicht der Fall, die Handhabung der Fehlersituation, das sogenannte Error-Handling ist beendet. Zum Zeitpunkt 8) wird das vom Master abgegebene Watch-dog-Signal S_{WD} von den Teilnehmern A und B wieder empfangen (E_{WD}). Es wird nunmehr die zweite Notlaufbetriebsart, der Sonder-Notlauf, aufrecht erhalten.

In Figur 4 ist wiederum ein Zeitdiagramm dargestellt, das den zeitlichen Ablauf der Signale bei der Handhabung eines stationären, globalen Fehlers wiedergibt. Im Gegensatz zum Fehlerfall in Figur 3 hat jedoch hier die Notlauf-Maßnahme M2 nicht zur Beseitigung des Fehlers geführt. Die Signale zu den Zeitpunkten 1) bis 6) entsprechen denen in Figur 3, so daß auf deren Beschreibung verzichtet werden kann.

Zum Zeitpunkt 6) wird also die zweite Notlauf-Maßnahme M2 eingeleitet, weil nach Einleitung der ersten Notlauf-Maßnahme M1 wiederum ein Fehlersignal CEI zum Zeitpunkt 4) aufgetreten ist, so daß das Watch-dog-Signal zum Zeitpunkt 5) nicht gesendet und empfangen werden konnte.

Nach Einleitung der zweiten Notlauf-Maßnahme M2 trat wiederum ein Fehlersignal CEI bei allen Teilnehmern auf, das Watch-dog-Signal S_{WD} konnte vom Master nicht gesendet und von den Teilnehmern A und B nicht empfangen (E_{WD}) werden.

Das Watch-dog-Signal hätte zum Zeitpunkt 8) gesendet und empfangen werden müssen.

Daraufhin werden zum Zeitpunkt 9) alle Teilnehmer des Computer-Netzwerks abgeschaltet, es wird also der sogenannte Bus-off eingeleitet.

Auch im abgeschalteten Zustand sind die Teilnehmer des Netzwerkes nicht vollkommen stromlos. Sie können noch auf Signale reagieren, sie können in dieser Notlauf-Phase noch Notfunktionen übernehmen.

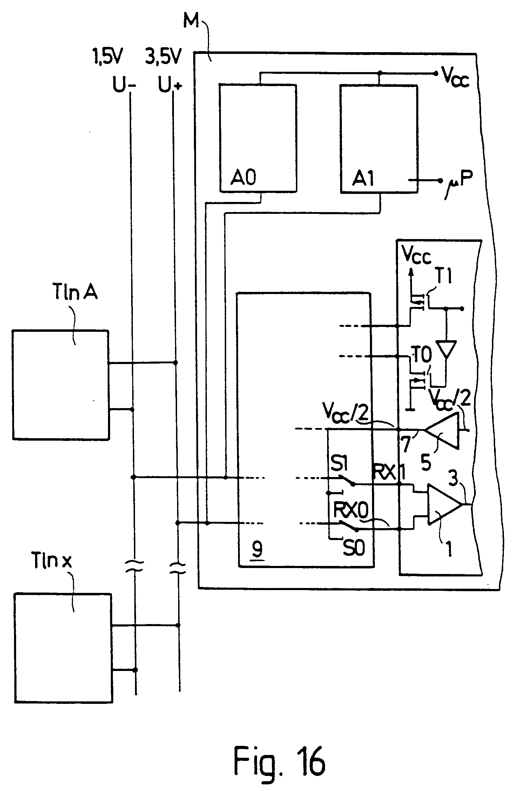

Zur Einleitung der in den Figuren 2 bis 4 erwähnten ersten Notlauf-Maßnahme M1 werden folgende Schritte unternommen:
Der der ersten Leitung U+ des Datenbusses zugeordnete Eingang RX0 aller CAN-IC's wird auf ein vorgegebenes Potential von beispielsweise V_{cc}/2 gelegt. Dies kann beispielsweise mittels eines Umschalters S0 erreicht werden, wie er in Figur 16 gezeigt ist. Anschließend wird der CAN-Baustein aller Teilnehmer neu gestartet. Durch diese Notlauf-Maßnahme wird ein erster Notlaufbetrieb, ein sogenannter Eindraht-Notlauf eingestellt.

Die in den Figuren 3 und 4 erwähnte zweite Notlauf-Maßnahme M2 besteht zum einem darin, die erste Notlauf-Maßnahme M1 rückgängig zu machen. Das heißt also, alle Eingänge RX0 werden wiederum mit der ersten Leitung U+ des Datenbusses verbunden und von dem vorgegebenen Potential V_{cc}/2 abgetrennt. Dafür werden alle Eingänge RX1, die der zweiten Datenleitung U- des Datenbusses zugeordnet sind, auf das vorgegebene Potential gelegt, indem der als Umschalter ausgebildete Schalter S1 betätigt wird.

Überdies wird die der zweiten Datenleitung U- zugeordnete Ausgangsklemme TX1 eines jeden Teilnehmers so geschaltet, daß Informationen der Teilnehmer nicht mehr auf die Datenleitung abgegeben werden können.

Ausschließlich beim Master wird zusätzlich die zweite Datenleitung U- abgeschaltet. Dies erfolgt über ein spezielles Steuersignal beispielsweise eines Mikroprozessors µP an das Abschlußnetzwerk A1, welches beim Master vorgesehen ist.

Durch die zweite Notlauf-Maßnahme M2 wird der zweite Notlaufbetrieb eingeschaltet, der sogenannte Sonder-Notlauf. Auch hier handelt es sich um einen Eindraht-Notlauf.

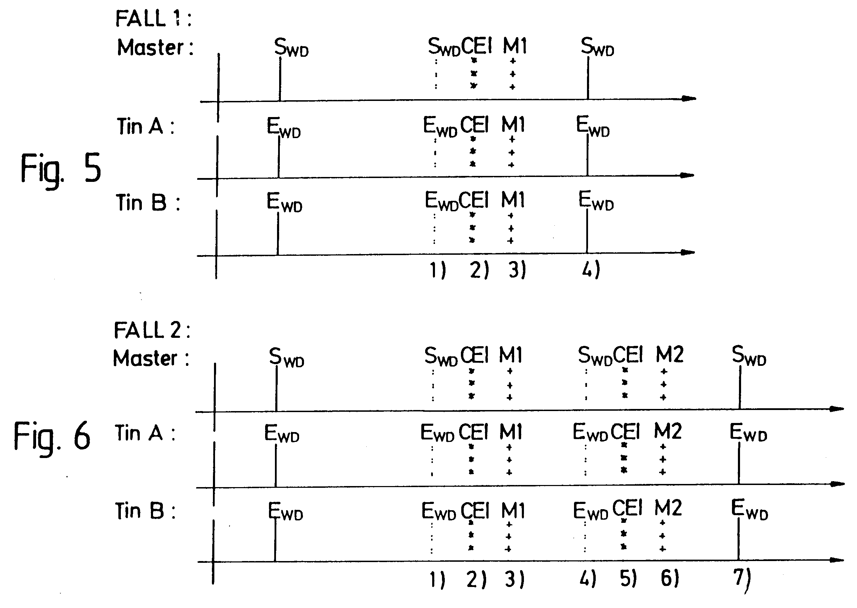

In den Zeitdiagrammen der Figuren 5,6 und 7 ist der zeitliche Ablauf des Error-Handlings bei einem dynamischen, globalen Fehler dargestellt. Beim Senden des Watch-dog-Signals S_{WD} des Masters erkennt jeder Knoten einen Fehler.

Aus Figur 5 ist ersichtlich, daß zunächst das vom Master abgegebene Watch-dog-Signal S_{WD} von den Teilnehmerns A und B empfangen wurde. Das zum Zeitpunkt 1) von Master abzugebende Watch-dog-Signal S_{WD} wurde nicht abgegeben, der durch tₜₒₗ vorgegebene Zeitrahmen beim Senden des Watch-dog-Signals wurde überschritten. Außerdem hat der Master ein CAN-Error-Interrupt-Signal CEI zur Zeit 2) erhalten, weil deas Watch-dog-Signal nicht fehlerfrei abgegeben werden konnte.

Bei den Teilnehmern A und B ist das Watch-dog-Signal des Masters auch nicht empfangen worden, das Signal E_{WD} blieb aus. Oder es wurde bei beiden Teilnehmern zum Zeitpunkt 2) das bausteininterne Fehlererkennungssignal CEI erhalten, weil das Watch-dog-Signal fehlerhaft empfangen wurde.

Daraufhin wurde zum Zeitpunkt 3) wie bei der Fehlerhandhabung bei einem stationären, globalen Fehler die Notlauf-Maßnahme M1 eingeleitet. In Figur 5 führte dies dazu, daß das Watch-dog-Signal S_{WD} vom Master gesendet und von den Teilnehmern A und B empfangen (E_{WD}) wurde. Dies war zum Zeitpunkt 4) der Fall. Das Computer-Netz arbeitet nun fehlerfrei in der ersten Notlaufbetriebsart, dem Eindraht-Notlauf.

Das in Figur 6 dargestellte Diagramm unterscheidet sich von dem in Figur 5 dadurch, daß zum Zeitpunkt 4) das Watch-dog-Signal nicht gesendet und empfangen werden konnte, daß also die Notlauf-Maßnahme M1, die zum Zeitpunkt 3) eingeleitet wurde, nicht zur Fehlerbehebung führte. Zum Zeitpunkt 4) wurde das Watch-dog-Signal weder gesendet noch empfangen, zum Zeitpunkt 5) erhielten alle Teilnehmer das interne Fehlererkennungssignal CEI.

Daraufhin wurde zum Zeitpunkt 6) die zweite Notlauf-Maßnahme M2 bei allen Teilnehmern eingeleitet. Die dafür erforderlichen Schritte wurden oben beschrieben.

Aufgrund der Notlauf-Maßnahme M2 trat bei dem in Figur 6 dargestellten Fall kein weiterer Fehler auf. Zum Zeitpunkt 7) konnte das Watch-dog-Signal gesendet und von den Teilnehmern empfangen werden. Die Fehlerhandhabung ist damit beendet. Der durch die Notlauf-Maßnahme M2 eingestellte Sonder-Notlauf wird aufrechterhalten.

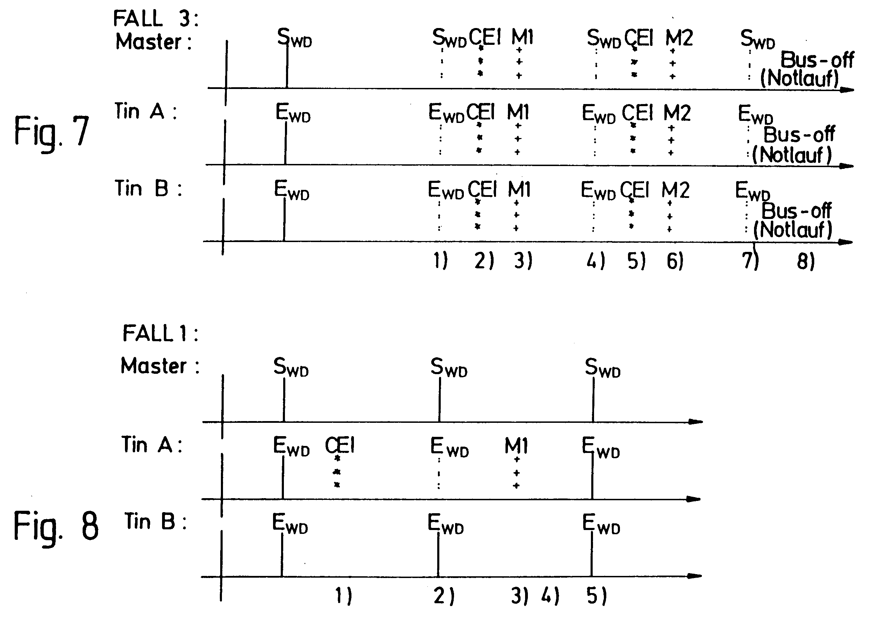

In dem Zeitdiagramm gemäß Figur 7 sind zu den Zeitpunkten 1) bis 6) die anhand der Figuren 5 und 6 erläuterten Signale eingezeichnet. Hier hat jedoch die zweite Notlauf-Maßnahme M2 keinen Erfolg: zum Zeitpunkt 7) kann das Watch-dog-Signal S_{WD} vom Master nicht gesendet und von den Teilnehmern A und B nicht empfangen werden (E_{WD}).

Daraufhin schalten sich die Teilnehmer vom Bus ab, es wird der sogenannte Bus-off eingeleitet. Dieser Vorgang findet zum Zeitpunkt 8) statt.

Auch hier findet noch ein spezieller Notlauf der Teilnehmer statt, so daß noch Notfunktionen erhalten sind.

Anhand der Zeitdiagramme in den Figuren 8 bis 10 wird die Reaktion auf einen stationären, lokalen, empfangsseitigen Fehler eines Teilnehmers, hier des Teilnehmers Tln A erläutert.

Sobald der Fehler auftritt, wird bei dem defekten Teilnehmer eine Fehlererkennungseinrichtung aktiviert. Diese weist beispielsweise einen Fehlerzähler auf, der bei jedem Fehler inkrementiert wird, bis schließlich ein CAN-Error-Interrupt-Signal (CEI) abgegeben wird. In Figur 8 tritt beim Teilnehmer A das CEI-Signal zum Zeitpunkt 1) auf.

Nach jedem CEI wird der Fehlerzähler des Teilnehmers zurückgesetzt, indem der CAN-Baustein resettet bzw. zurückgesetzt und dann wieder neu gestartet wird.

Zum Zeitpunkt 2) hätte das vom Master abgegebene Watch-dog-Signal S_{WD} beim Teilnehmer A eintreffen sollen. Dies war nicht der Fall, was durch die übereinanderliegenden Doppelpunkte gekennzeichnet ist, die mit E_{WD} bezeichnet sind. Aus Figur 8 ist durch den durchgezogenen Strich angedeutet, daß das Watch-dog-Signal beim Teilnehmer B zum Zeitpunkt 2) eintrifft.

Aufgrund des ausbleibenden Watch-dog-Signals S_{WD} wird beim Teilnehmer A - wie beim stationären, globalen Fehler - die Notlauf-Maßnahme M1 eingeleitet, nämlich zum Zeitpunkt 3). In Figur 8 treten zum Zeitpunkt 4) keine weiteren CEI-Signale auf, das heißt, der erste Notlauf-Betrieb, der Eindraht-Notlauf, des defekten Teilnehmers A wird aufrechterhalten. Das Netzwerk arbeitet nun wieder fehlerfrei.

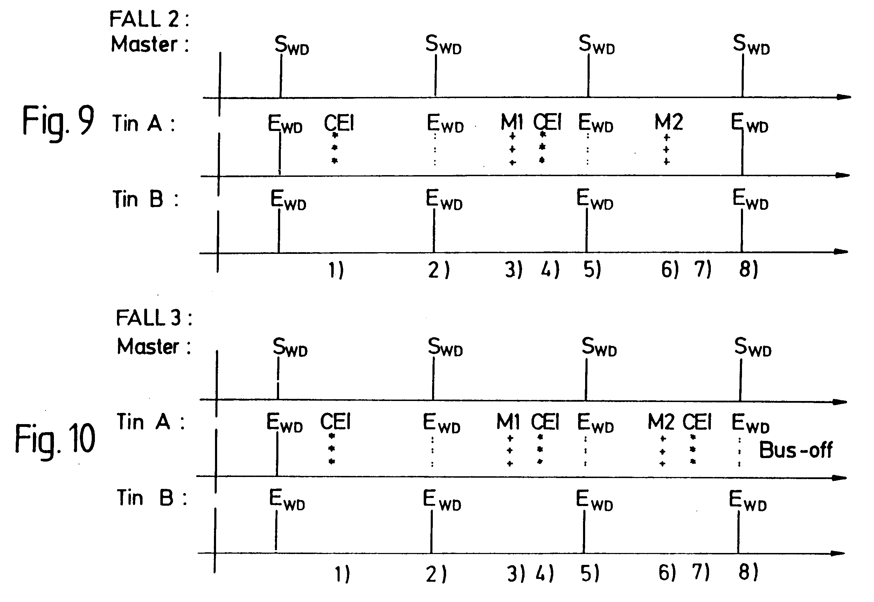

Bei dem Zeitdiagramm in Figur 9 wird davon ausgegangen, daß auch nach Einleitung der ersten Notmaßnahme M1 zum Zeitpunkt 3) der Fehler des ersten Teilnehmers nicht beseitigt ist. Daher tritt zum Zeitpunkt 4) ein internes Fehlererkennungssignal CEI des Teilnehmers A auf. Er ist auch nicht in der Lage zum Zeitpunkt 5) das externe Fehlererkennungsignal des Masters, das Watch-dog-Signal S_{WD}, zu empfangen. Das Signal kommt dagegen beim Teilnehmer B fehlerfrei an.

Aufgrund dieser Tatsache leitet der Teilnehmer A zum Zeitpunkt 6) die zweite Notlauf-Maßnahme M2 ein.

Zum Zeitpunkt 7) stellt sich heraus, daß keine weiteren Fehlererkennungssignale CEI beim Teilnehmer A auftreten. Er arbeitet nun also fehlerfrei und kann zum Zeitpunkt 8) das Watch-dog-Signal S_{WD} des Masters empfangen E_{WD}. Es wird nunmehr die zweite Notlaufbetriebsart, der Sonder-Notlauf, des Teilnehmers A aufrecht erhalten.

In Figur 10 ist ein Zeitdiagramm dargestellt, bei dem zu dem Zeitpunkten 1) bis 6) dieselben Signale wie in den Figuren 8 und 9 eingetragen sind. Allerdings ist hier zum Zeitpunkt 7) auch nach Einteilung der Notlauf-Maßnahme M2 der Fehler des Teilnehmers A immernoch nicht behoben. Vielmehr taucht dort ein weiteres internes Fehlererkennungssignal CEI auf. Er kann auch zum Zeitpunkt 8) das Watch-dog-Signal S_{WD} des Masters nicht empfangen. Er wird daher zum Zeitpunkt 9) vom Netz getrennt und geht in den Bus-off-Zustand über. Auch hier wird ein Notbetrieb mit Notfunktionen des Teilnehmers A aufrechterhalten.

Durch den in Figuren 8 bis 10 beschriebene Notlauf-Maßnahme M1 wird der defekte Teilnehmer A in den ersten Notlauf-Betriebszustand, den sogenannten Eindraht-Notlauf gebracht. Durch die Notlauf-Maßnahme M2 wird der defekte Teilnehmer A in den zweiten Notlauf-Betrieb, den sogenannten Sonder-Notlauf gebracht.

Bei einem dynamischen, lokalen empfangsseitigen Fehler eines Teilnehmers ist das Error-Handling identisch wie beim dynamischen, globalen Fehler, das anhand der Figuren 5 bis 7 beschrieben wurde. Das liegt daran, daß der Teilnehmer nicht erkennen kann, ob es sich lediglich um einen lokalen oder einen globalen Fehler handelt.

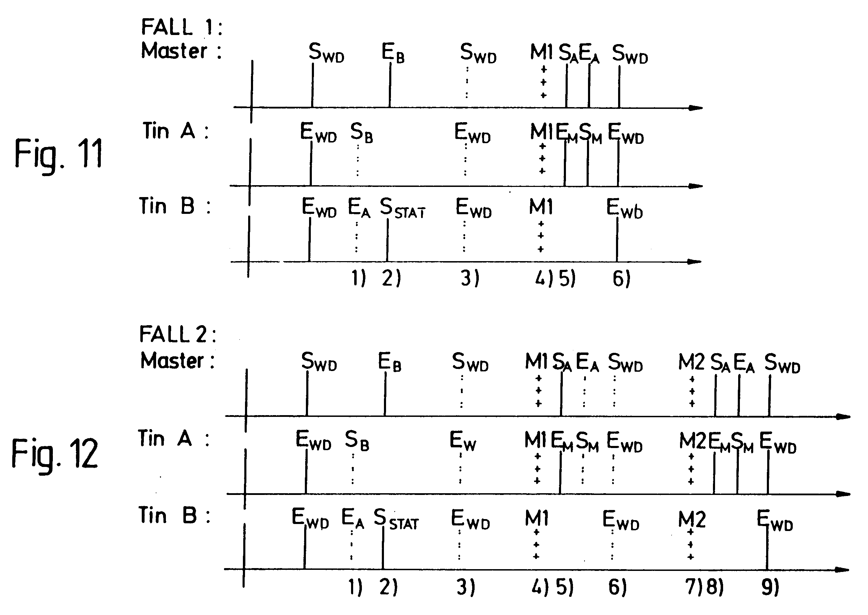

Anhand der Zeitdiagramme in den Figuren 11 bis 12 wird die Fehlerreaktion, das Error-Handling, bei einem lokalen, sendeseitigen Fehler beschrieben. Bei einem derartigen Defekt kann ein Teilnehmer das Watch-dog-Signal des Masters zwar empfangen, so daß kein Error-Handling eingeleitet wird. Er ist allerdings nicht imstande, den Empfang des Signals des Masters zu bestätigen. Er müßte dazu ein Acknowledge-Bit auf das Datennetz abgeben. Bei mehreren Teilnehmern ist der Master nicht in der Lage zu erkennen, welcher Teilnehmer defekt ist, sofern er wenigstens ein Acknowledge-Bit empfängt, da jeder Teilnehmer, der das Watch-dog-Signal erhält, ein derartiges Bit sendet.

Der lokale, sendeseitige Fehler wird aber dann erkannt, wenn ein Teilnehmer ein Signal eines anderen erwartet. Geht dieses Signal nicht ein, so kann dieser Teilnehmer erkennen, daß der Teilnehmer, der senden wollte, einen Fehler im Sendeteil aufweist.

Bei dem Zeitdiagramm in Figur 4 wird davon ausgegangen, daß der Teilnehmer A ein Signal S_{B} an den Teilnehmer B senden sollte. Zum Zeitpunkt 1) geht dieses Signal beim Teilnehmer B nicht ein, er empfängt keine Nachricht (E_{A}) vom Teilnehmer A. Der Teilnehmer B gibt daraufhin zum Zeitpunkt 2) eine sogenannte Status-Message an den Master mit dem Inhalt ab, "der Teilnehmer A hat nicht gesendet". In Figur 11 ist der Empfang dieses Signals mit E_{B} zum Zeitpunkt 2) angedeutet. Aufgrund der Status-Message des Teilnehmers B erkennt der Master den lokalen, sendeseitigen Defekt beim Teilnehmer A und provoziert die Einleitung des Error-Handlings, indem er das nächste Watch-dog-Signal S_{WD} zum Zeitpunkt 3) ausfallen läßt. Daraufhin können auch die Teilnehmer A und B ein derartiges Signal nicht empfangen (E_{WD}).

Aufgrund des Ausfalls des Watch-dog-Signals des Masters wird bei allen Teilnehmern ein Error-Handling eingeleitet. Zum Zeitpunkt 4) wird daraufhin die erste Notlauf-Maßnahme M1 eingeleitet, wie dies bei einem globalen Fehler der Fall ist.

Nach Einleitung der Notlauf-Maßnahme bittet der Master zum Zeitpunkt 5) den defekten Teilnehmer A, sich bei ihm zu melden. Der defekte Teilnehmer hat auf diese Weise die Möglichkeit, sich zu testen.

In Figur 11 wird davon ausgegangen, daß der Teilnehmer A aufgrund des durch die Maßnahme M1 eingeleiteten Eindraht-Notlaufs nunmehr in der Lage ist, sich beim Master zu melden. Die Aufforderung S_{A} des Masters trifft beim Teilnehmer ein. Dies ist durch E_{M} angedeutet. Daraufhin gibt der Teilnehmer A das Signal S_{M} ab. Dieses Signal trifft auch beim Master ein, was durch E_{A} angedeutet ist. Der nachfolgende Zyklus erfolgt nunmehr fehlerfrei: das Watch-dog-Signal S_{WD} des Masters trifft beim Teilnehmer A zum Zeitpunkt 6) ein (E_{WD}). Selbstverständlich wird das Watch-dog-Signal des Masters vom fehlerfreien Teilnehmer B empfangen.

In Figur 12 ist ein Zeitdiagramm gezeigt, das mit dem in Figur 11 bis zum Zeitpunkt 4) übereinstimmt. Das heißt also, bei der Fehlerreaktion in Figur 12 wird die Notlauf-Maßnahme M1 zum Zeitpunkt 4 bei allen Teilnehmern eingeleitet. Danach fordert der Master den Teilnehmer A auf, sich bei ihm zu melden. Das Signal S_{A} des Masters trifft zum Zeitpunkt 5) beim Teilnehmer A ein, was durch den durchgehenden Strich gekennzeichnet ist, der mit E_{M} bezeichnet ist.

Der Teilnehmer A ist aufgrund des sendeseitigen Defekts allerdings nicht in der Lage, das Signal S_{A} an den Master abzusenden. Dieser unterdrückt daraufhin beim nächsten Zyklus zum Zeitpunkt 6) die Abgabe des Watch-dog-Signals S_{WD}, so daß weder der Teilnehmer A noch der Teilnehmer B ein derartiges Signal empfangen können. Bei allen Teilnehmern wird daraufhin die zweite Notlauf-Maßnahme M2 eingeleitet und zwar zum Zeitpunkt 7). In Figur 12 wird davon ausgegangen, daß nunmehr die Aufforderung des Masters an den Teilnehmer A, sich beim Master zu melden, korrekt beantwortet wird. Zum Zeitpunkt 8) werden also die Signale S_{A}, E_{M} fehlerfrei ausgetauscht.

Danach kann zum Zeitpunkt 9) ein fehlerfreier Betrieb aufrechterhalten werden, nämlich der Sonder-Notlauf: das Watch-dog-Signal S_{WD} trifft fehlerfrei bei den Teilnehmern A und B ein.

Bei der Behandlung des lokalen, sendesseitigen Fehlers wird davon ausgegangen, daß bei allen Teilnehmern die Notlauf-Maßnahmen M1 und M2 ausgeführt werden, die oben anhand des stationären, globalen Fehlers erläutert werden. Nach der Notlauf-Maßnahme M1 befinden sich alle Teilnehmer im ersten Notlauf-Betrieb, dem Eindraht-Notlauf. Muß nach einem weiteren Fehler die zweite Notlauf-Maßnahme M2 eingeleitet werden, befinden sich alle Teilnehmer im zweiten Notlaufbetrieb, dem Sonder-Notlauf.

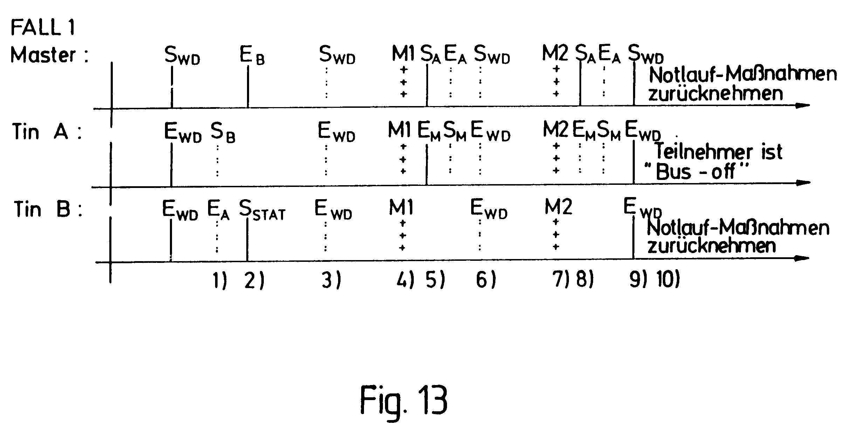

Figur 13 zeigt die zeitliche Abfolge der Signale bei der Fehlerhandhabung im Falle eines Bus-off-Zustand eines Teilnehmers. Dieser Fehler kann erst erkannt werden, wenn eine erwartete Botschaft eines Teilnehmers ausbleibt. Es wird dann geprüft, ob der entsprechende Teilnehmer sendeseitig defekt ist, oder ob er sich im Zustand "Bus-off" befindet. Bei der Darstellung in Figur 13 wird von einem Bus-off des Teilnehmers A ausgegangen.

Die Maßnahmen, die in Figur 13 zu den Zeitpunkten 1) bis 7) dargestellt sind, entsprechen denen, die bei einem lokalen, sendeseitigen Defekt ergriffen werden. Insofern wird auf die Beschreibung der Figuren 11 und 12 verwiesen.

Zunächst kann das externe Fehlererkennungssignal des Masters, das Watch-dog-Signal S_{WD}, von den Teilnehmern A und B empfangen werden. Zum Zeitpunkt 1) erhält der Teilnehmer B eine erwartete Nachricht des Teilnehmers A nicht mehr. Er gibt daher zum Zeitpunkt 2) eine Status-Message "Teilnehmer A hat nicht gesendet" an den Master ab. Dieser läßt daraufhin zum Zeitpunkt 3) das Watch-dog-Signal ausfallen, wodurch bei allen Teilnehmern zum Zeitpunkt 4) die erste Notlauf-Maßnahme M1 eingeleitet wird. Zum Zeitpunkt 5) fordert der Master den Teilnehmer A durch das Signal S_{A} auf, sich beim ihm zu melden. Dazu ist der Teilnehmer nicht in der Lage.

Daraufhin wird zum Zeitpunkt 6) das Watch-dog-Signal des Masters wiederum unterdrückt. Alle Teilnehmer leiten deshalb zum Zeitpunkt 7) die zweite Notlauf-Maßnahme M2 ein.

Wiederum fordert der Master zum Zeitpunkt 8) den Teilnehmer A auf, sich bei ihm zu melden. Dazu ist dieser immernoch nicht in der Lage.

Der Master schließt daraus, daß der Teilnehmer A nicht am Busverkehr teilnimmt und im Bus-off-Zustand ist. Daraufhin werden sowohl beim Master als auch bei allen anderen Teilnehmern die Notlauf-Maßnahme zurückgenommen. Lediglich der Teilnehmer A bleibt weiterhin im Bus-off. Die Rücknahme der Notlauf-Maßnahmen erfolgt zum Zeitpunkt 10).

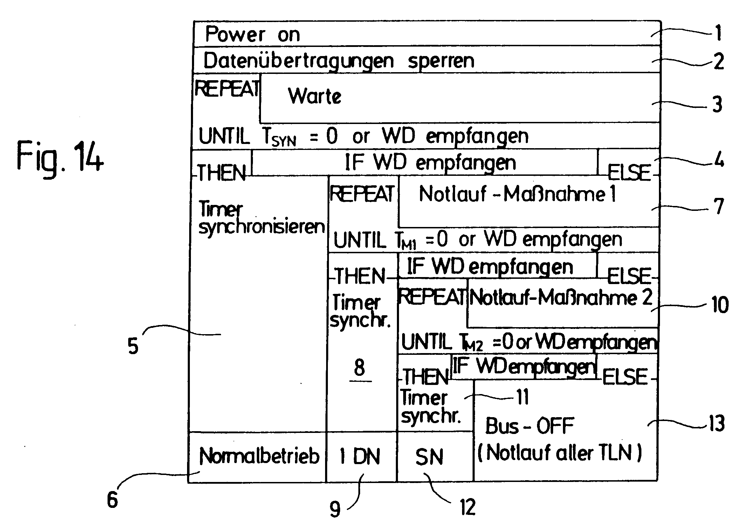

Anhand des Struktogramms in Figur 14 wird nun das Fehlerüberwachungsverfahren das Error-Handling bei einem Fehler im Ruhezustand erläutert. Wenn nämlich bereits vor dem Anstarten des Computer-Netzwerkes ein Fehler vorliegt, müssen die einzelnen Teilnehmer die Notlauf-Maßnahmen synchron einleiten. Dazu sind wesentliche längere Synchronisationszeiten nötig, als in Figur 1 angedeutet. Um zu gewährleisten, daß alle Teilnehmer dieselbe Notlauf-Maßnahme gleichzeitig durchführen, sind beispielsweise Synchronisationszeiten von T_{M1}=1s und T_{M2}=2s nötig. Mit TM1 und TM2 werden die Synchronisationszeiten bezeichnet, während der die Notlauf-Maßnahmen M1 und M2 aufrechterhalten werden. In diesen Zeiträumen wird geprüft, ob das Watch-dog-Signal eintrifft.

In einem ersten Schritt 1 wird die Spannungsversorgung des Computer-Netzwerkes eingeschaltet. Im zweiten Schritt 2 werden alle Datenübertragungen der Teilnehmer gesperrt. Im dritten Schritt 3 wird gewartet, bis die in Figur 1 dargestellte Synchronisationszeit T_{SYN} abgelaufen ist, oder bis ein Watch-dog-Signal empfangen wurde.

In Schritt 4 wird abgefragt, ob das Watch-dog-Signal eingegangen ist. Wenn dies der Fall ist, wird in Schritt 5 eine Synchronisation des Computer-Netzwerks vorgenommen und anschließend in Schritt 6 der Normalbetrieb des Computer-Netzwerks aufgenommen.

Wenn kein Watch-dog-Signal empfangen wurde, wird in Schritt 7 die Notlauf-Maßnahme M1 eingeleitet. Diese wird aufrechterhalten, bis die Synchronisationszeit T_{M1} abgelaufen ist, oder bis ein Watch-dog-Signal empfangen wurde. Wenn dies der Fall ist, wird in Schritt 8 die Timer-Synchronisation vorgenommen und in Schritt 9 der erste Notlaufbetrieb, der Eindraht-Notlauf 1 DN aufrechterhalten.

Wenn kein Watch-dog-Signal eingegangen ist, wird die Notlauf-Maßnahme M2 in Schritt 10 eingeleitet. Diese wird aufrechterhalten, bis die Zeit T_{M2} abgelaufen ist, oder bis ein Watch-dog-Signal empfangen wurde. Wenn dies der Fall ist, wird in Schritt 11 eine Timer-Synchronisation vorgenommen und anschließend in Schritt 12 der Sonder-Notlauf SN aufrechterhalten.

Sollte kein Watch-dog-Signal eingehen, so wird im Schritt 13 der Bus-off aller Teilnehmer eingeleitet. Die Teilnehmer verbleiben in einer Grund-Notlauf-Betriebsart.

Die Notlauf-Maßnahme M1 und M2 ist identisch mit denen, die anhand des statischen, globalen Fehlers beschrieben wurden. Auf die Erläuterung des Error-Handlings dieses Fehlerfalls wird daher verwiesen. Es zeigt sich auch, daß bei dem Verfahren in Figur 14 durch die Notlauf-Maßnahme 1 der erste Notlauf-Betrieb, der Eindraht-Notlauf, und durch die zweite NotlaufMaßnahme M2 der zweite Notlauf-Betrieb, der Sonder-Notlauf, aufrechterhalten wird.

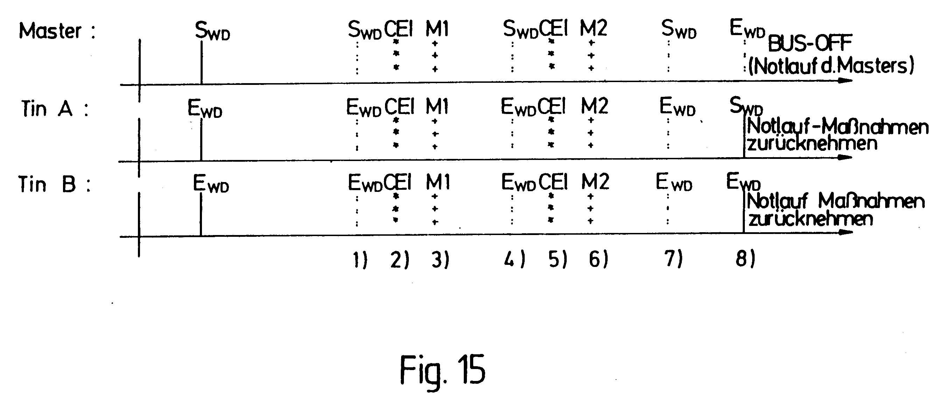

Figur 15 zeigt ein Zeitdiagramm, in dem der zeitliche Ablauf der Signale bei der Reaktion auf einen Defekt des Masters wiedergegeben ist.

Die zu den Zeitpunkten 1) bis 7) auftretenden Signale entsprechen denen des Error-Handlings bei einem dynamischen, globalen Defekt.

Aus dem Diagramm ist ersichtlich, daß zunächst das vom Master abgegebene Fehlererkennungssignal, das Watch-dog-Signal S_{WD} von den beiden Teilnehmern A und B fehlerfrei empfangen wurde. Zum Zeitpunkt 1) wurde das Watch-dog-Signal immernoch weder gesendet noch empfangen. Daraufhin gaben alle Teilnehmer zum Zeitpunkt 2) das interne Fehlererkennungssignal CEI ab und leiteten zum Zeitpunkt 3) die ersten Notlauf-Maßnahme M1 ein. Es zeigt sich, daß diese Maßnahme den Fehler nicht beseitigen konnte: zum Zeitpunkt 4) wurde das Watch-dog-Signal weder gesendet noch empfangen. Daraufhin gaben alle Teilnehmer zum Zeitpunkt 5) das interne Fehlersignal CEI ab und leiteten zum Zeitpunkt 6) die zweite Notlauf-Maßnahme M2 ein. Der daraufhin eingerichtete zweite Notlauf-Betrieb, der Sonder-Notlauf, konnte ebenfalls den Fehler nicht beseitigen. Zum Zeitpunkt 7) wurde das Watch-dog-Signal immernoch weder gesendet noch empfangen.

Um eine Totalabschaltung des gesamten Systems zu vermeiden, wird nun zum Zeitpunkt 8) ausschließlich der Master vom Netz getrennt; es findet dort ein Bus-off statt. Es wird lediglich eine Notlauffunktion des Masters aufrechterhalten.

Statt des Masters sendet nun beispielsweise der Teilnehmer A zum Zeitpunkt 8) das nächste Watch-dog-Signal, was mit einem durchgehenden Strich und der Bezeichnung S_{WD} dargestellt ist. Dieses Signal wird auch fehlerfrei vom Teilnehmer B empfangen. Beide Teilnehmer nehmen nun die zu den Zeitpunkten 3) und 6) eingeleiteten Notlauf-Maßnahmen zurück und arbeiten ohne Fehlerüberwachung weiter. Es ist auch möglich, daß mehr als ein weiterer Teilnehmer so ausgestattet wird, daß er die volle Masterfunktion, also auch die Busversorgung und die Überwachung der Pegel auf den Busleitungen übernehmen kann. Dazu müßte aber jeweils ein Abschlußnetzwerk bei den entsprechenden Teilnehmern vorgesehen werden, was allerdings sehr aufwendig wäre.

Zur Verdeutlichung des oben Gesagten ist in Figur 16 eine Prinzipskizze eines Computer-Netzwerkes wiedergegeben.

Ein die Teilnehmer verbindender Datenbus weist hier beispielsweise zwei Datenleitungen U+ und U- auf. Über diese Leitungen werden die Informationen des Netzes weitergegeben.

Einer der Teilnehmer übernimmt die Busversorgung und die Überwachung der auf den Datenleitungen vorhandenen Pegel. Er dient als Master M. Er ist mit einem Abschlußnetzwerk A0 und A1 versehen, das einerseits mit einer Versorgungsspannung V_{cc} und andererseits mit den Datenleitungen U- und U+ des Busses verbunden ist. Die Abschlußnetzwerke können beispielsweise Emitterfolger aufweisen. Ein Element A1 des Abschlußnetzwerkes ist mit einem Mikroprozessor µP verbunden, der Steuersignale abgibt. Beispielsweise bei der Einleitung der zweiten Notlauf-Maßnahme M2 wird durch ein geeignetes Steuersignal die zweite Datenleitung U- abgeschaltet.

Der Master M weist einen CAN-Baustein auf, von dem hier lediglich die Ausgangsklemmen TX0 und TX1 des Sendeteils und die Eingangsklemmen RX1 und RX0 des Empfangsteils angedeutet sind. Von dem Sendeteil des CAN-Bauteils sind lediglich die Treiberstufen T1 und T0 dargestellt, von denen die eine, T1, mit einer Versorgungsspannung von beispielsweise +5V und die andere, T0, mit Masse verbunden ist. Die beiden Treiberstufen werden auf geeignete Weise angesteuert. Die Eingangsklemmen RX0 und RX1 des CAN-Bausteins sind mit einem Empfangskomparator 1 verbunden, der die auf den Eingangsklemmen auftauchenden Signale auswertet und über eine Ausgangsleitung 3 weitergibt. Der CAN-Baustein ist überdies mit einem Operationsverstärker 5 versehen, an dessen Eingang die Spannung V_{cc}/2 anliegt. Über seinen Ausgang 7 wird eine Klemme V_{cc}/2 auf dieses Potential angelegt. Es dient als Bezugspotential. Zwischen den Datenleitungen U+ und U- und den Eingangsklemmen RX0 und RX1 sowie den Ausgangsklemmen TX0 und TX1 ist eine Busankopplung 9 vorgesehen, die der Einstellung spezieller Potentiale dient.

Die Busankopplung 9 ist überdies mit Umschaltkontakten S0 und S1 versehen, die mit den Eingangsklemmen RX0 und RX1 des CAN-Bausteins zusammenwirken. Über den ersten Umschaltkontakt S0 kann die Eingangsklemme RX0 des CAN-Bausteins mit dem vorgegebenen Potential verbunden werden. Der zweite Umschaltkontakt S1 dient dazu, die Eingangsklemme RX1 des CAN-Bausteins bei Bedarf auf das vorgegebene Potential zu legen.

Aus der Beschreibung des Error-Handlings wird deutlich, daß zur Einleitung der ersten Notlauf-Maßnahme M1 die Eingangsklemme RX0 über den Schalter S0 auf das vorgegebene Potential von beispielsweise V_{cc}\2 gelegt wird. Wenn diese Notlauf-Maßnahme nicht zu dem gewünschten Erfolg führt und weiterhin Fehler auftreten, so wird der Schalter S0 in seine ursprüngliche, in Figur 16 dargestellte Lage zurückbewegt.

Anschließend wird zur Einleitung der zweiten Notlauf-Maßnahme M2 der Umschaltkontakt S1 betätigt und die Eingangsklemme RX1 des CAN-Bausteins mit dem vorgebbaren Potential von beispielsweise V_{cc}\2 verbunden.

Die Zeitdiagramme der Figuren 1 bis 15 zeigen außer dem Master jeweils zwei Teilnehmer A und B. In der Darstellung gemäß Figur 16 wird davon ausgegangen, daß auch mehr als insgesamt 3 Teilnehmer mit den Datenleitungen verbunden werden können. Es ist daher ein Teilnehmer Tln x dargestellt.

Die Teilnehmer A bis x zeigen alle denselben Aufbau. Sie sind mit einem CAN-Baustein und einer Busankopplung 9 versehen. Ausschließlich der Master ist noch mit einem Abschlußnetzwerk versehen.

Es ist jedoch möglich, mindestens einen weiteren Teilnehmer ebenfalls mit einem Abschlußnetzwerk zu versehen, damit dieser im Falle eines Fehlers des Masters dessen Funktion übernehmen kann. Dies wurde anhand der Beschreibung von Fiugr 15 erwähnt.

Nach allem ist festzustellen, daß mit dem oben beschriebenen Verfahren Funktionsfehler des Datenbusses und/oder einzelner Teilnehmer des Computer-Netzwerkes erkannt werden können. Je nach Auswirkung des Fehlers wird eine geeignete Fehlerreaktion, ein Error-Handling, eingeleitet. Dadurch werden entsprechende Notlauf-Maßnahmen ergriffen, die eine weitere Funktion des Netzwerkes auch nach Auftreten des Fehlers ermöglicht.

Es ist denkbar, daß die verschiedenen Fehler, die anhand der Fehlererkennungssignale unterscheidbar sind, angezeigt werden.

Dadurch, daß der in Figur 16 dargestellte Master M eine Pegelüberwachung vornimmt, sind stationäre, globale oder dynamische, globale sowie stationäre, lokale Pegelfehler unterscheidbar. Dabei ist der Pegel auf dem Bus im stationären Zustand oder im dynamischen Zustand verzogen. Beim zuletzt erwähnten Pegelfehler ist der Pegel an den Komparatoreingängen RX0 und RX1 bei dem betroffenen CAN-Baustein verzogen. Bei derartigen Pegelfehlern bleibt das System weiterhin funktionfähig. Der Master ist jedoch in der Lage, derartige Fehler anzuzeigen.

## Patentansprüche

1. Verfahren zur Überwachung eines Computer-Netzwerks mit mindestens zwei über einen wenigstens zwei Leitungen umfassenden Datenbus verbundenen Teilnehmern, die jeweils ein Empfangs- und/oder ein Sendeteil aufweisen, dadurch gekennzeichnet, daß zur Überwachung der Funktion des Datenbusses und/oder der Teilnehmer wenigstens ein Teilnehmer (Master) zyklisch ein externes Fehlererkennungssignal (watch-dog-message, S_{WD}) aussendet, daß die Teilnehmer (M, TlnA, TlnX) eine Fehlererfassungseinrichtung enthalten, die bei Ausfall des externen Fehlererkennungssignals (watch-dog-message, S_{WD}) ein internes Fehlererkennungssignal (CAN-error-interrupt, CEI) abgibt und daß daraufhin Notlauf-Maßnahmen (M1, M2) zur Einstellung von definierten Notlauf-Betriebsarten (Eindraht-, Sonder-Notlauf) im Teilnehmer (M, TlnA, TlnX) ergriffen werden.

2. Verfahren nach Anspruch 1, dadurch gekennzeichnet, daß das von dem wenigstens einen Teilnehmer (Master) abgegebene externe Fehlererkennungssignal (watch-dog-Signal, S_{WD}) im fehlerfreien Betrieb von allen anderen Teilnehmern (M, TlnA, TlnX) innerhalb eines vorgebbaren Zeitfensters empfangen wird.

3. Verfahren nach Anspruch 1 oder 2, dadurch gekennzeichnet, daß bei einem stationären, globalen Fehler, der alle Teilnehmer betrifft, und bei dem die Leitungen (U-, U+) des Datenbusses ständig ihren aktivierten Zustand (dominanter Pegel) einnehmen, in jedem Teilnehmer das interne Fehlererkennungssignal (CAN-error-interrupt, CEI) abgegeben wird.

4. Verfahren nach Anspruch 1 oder 2, dadurch gekennzeichnet, daß ein dynamischer, globaler Fehler, der alle Teilnehmer betrifft, und bei dem die Leitungen (U-, U+) des Datenbusses ständig ihrer aktivierten Zustand (rezessiver Pegel) einnehmen, bei einer Datenübertragung erkannt wird, und daß daraufhin in jedem Teilnehmer das interne Fehlererkennungssignal (CAN-error-interrupt, CEI) abgegeben wird.

5. Verfahren nach Anspruch 1 oder 2, dadurch gekennzeichnet, daß bei einem stationären Fehler des Empfangsteils eines Teilnehmers (M, TlnA, TlnX) dessen Fehlererfassungseinrichtung aktiviert wird bis das interne Fehlererkennungssignal (CAN-error-interrupt, CEI) abgegeben wird.

6. Verfahren nach Anspruch 3 oder 4, dadurch gekennzeichnet, daß bei jedem internen Fehlererkennungssignal (CAN-error-interrupt, CEI) die Fehlererfassungseinrichtung in ihren Ausgangszustand versetzt wird.

7. Verfahren nach einem der Ansprüche 4 bis 6, dadurch gekennezeichnet, daß als Fehlererfassungseinrichtung ein Frequenzfehler verwendet wird, der bei einem vorgebbaren Fehlerstand das Fehlersignal abgibt.

8. Verfahren nach Anspruch 7, dadurch gekennzeichnet, daß der Fehlerzähler zurückgesetzt und damit in seinen Ausgangszustand versetzt wird, indem der Teilnehmer zurückgesetzt und anschließend neu gestartet wird.

9. Verfahren nach einem der vorhergehenden Ansprüche, dadurch gekennzeichnet, daß bei einem Fehler des Sendeteils eines Teilnehmers (M, TlnA, TlnX) das externe Fehlererkennungssignal (watch-dog-message, S_{WD}) des Masters (M) unterdrückt und dadurch die Notlaufmaßnahmen (M1, M2) eingeleitet werden.

10. Verfahren nach einem der vorhergehenden Ansprüche, dadurch gekennzeichnet, daß bei einem Auftreten des internen Fehlererkennungssignals (CAN-error-interrupt, CEI) zunächst eine erste Notlaufmaßnahme (M1) zur Einstellung einer ersten Notlauf-Betriebsart (Eindraht-Notlauf) eingeleitet wird.

11. Verfahren nach Anspruch 10, dadurch gekennzeichnet, daß bei fehlerfreiem Betrieb des Netzwerks nach Einstellung des ersten Notlauf-Betriebs (Eindraht-Notlauf) diese Betriebsart beibehalten wird.

12. Verfahren nach Anspruch 10 oder 11, dadurch gekennzeichnet, daß bei Auftreten weiterer Fehlersignale (watch-dog-Signal; CEI) nach Einstellung des ersten Notlauf-Betriebs (Eindraht-Notlauf) die erste Notlauf-Maßnahme (M1) zurückgenommen und zur Einstellung des zweiten Notlauf-Betriebs (Sonder-Notlauf) die zweite Notlaufmaßnahme (M2) eingeleitet wird.

13. Verfahren nach Anspruch 12, dadurch gekennzeichnet, daß bei fehlerfreiem Betrieb nach Einstellung des zweiten Notlauf-Betriebs (Sonder-Notlauf) diese Betriebsart beibehalten wird.

14. Verfahren nach Anspruch 12, dadurch gekennzeichnet, daß bei Auftreten eines weiteren externen oder internen Fehlererkennungssignals (watch-dog-Signal; CEI) nach Einstellung des zweiten Notlauf-Betriebs (Sonder-Notlauf) zumindest der defekte Teilnehmer, bei einem Fehler des Masters und bei einem globalen, alle Teilnehmer betreffenden Fehler alle Teilnehmer abgeschaltet (Bus-off) werden.

15. Verfahren nach Anspruch 14, dadurch gekennzeichnet, daß nach Abschaltung (Bus-off) eines einzelnen Teilnehmers die zweite Notlauf-Maßnahme (M2) zurückgenommen wird.

16. Verfahren nach Anspruch 14, dadurch gekennzeichnet, daß bei Abschaltung (Bus-off) des das externe Fehlererkennungssignal (watch-dog-Signal) abgebenden Teilnehmers (Master) die Fehlerüberwachung abgeschaltet wird.

17. Verfahren nach einem der Ansprüche 1 bis 16, dadurch gekennzeichnet, daß bei einem bereits im Ruhezustand des Computernetzes vorliegenden Fehler die Teilnehmer die Notlauf-Maßnahmen (M1, M2) synchron einleiten.

18. Verfahren nach Anspruch 10, 12 oder 17, dadurch gekennzeichnet, daß bei einem lokalen, einzelne Teilnehmer betreffenden Fehler als erste Notlauf-Maßnahme (M1) die der zweiten Leitung (U+) des Datenbusses zugeordnete Eingangsklemme (RX0) des betroffenen Teilnehmers auf ein vorgebbares Potential gelegt wird.

19. Verfahren nach Anspruch 12 oder 17, dadurch gekennzeichnet, daß bei einem globalen, alle Teilnehmer betreffenden Fehler und/oder bei einem Fehler des Masters als erste Notlauf-Maßnahme (M1) die der zweiten Leitung (U+) des Datenbusses zugeordnete Eingangsklemmen (RX0) aller Teilnehmer auf ein vorgebbares Potential gelegt und alle durch ein internes Fehlererkennungssignal (CEI) zurückgesetzten Teilnehmer neu gestartet werden.

20. Verfahren nach Anspruch 12, 13, 14 oder 15 oder 17, **dadurch gekennzeichnet,** daß bei einem lokalen, einzelne Teilnehmer betreffende Fehler als zweite Notlauf-Maßnahme (M2) die der zweiten Leitung (U-) des Datenbusses zugeordnete Eingangsklemme (RX1) des betroffenen Teilnehmers auf ein vorgebbares Potential gelegt, die der zweiten Leitung (U-) zugeordnete Ausgangsklemme (TX1) des Teilnehmers so geschaltet wird, das keine Informationen auf dieser Leitung abgegeben werden können.

21. Verfahren nach Anspruch 12, 13, 14, 15 oder 17, **dadurch gekennzeichnet,** daß bei einem lokalen Fehler des das externe Fehlererkennungssignal (Watch-dog-Signal) abgebenden Teilnehmers (Master) und/oder bei globalen, alle Teilnehmer betreffenden Fehler als zweite Notlauf-Maßnahme (M2), die zweite Leitung (U-) durch den Master abgeschaltet wird, die der zweiten Leitung (U-) des Datenbusses zugeordnete Eingangsklemme (RX1) aller Teilnehmer auf ein vorgebbares Potential gelegt, die der zweiten Leitung (U-) zugeordneten Ausgangsklemmen (TX1) aller Teilnehmer so geschaltet werden, daß keine Informationen auf dieser Leitung abgegeben werden können.

## Claims

1. Method for monitoring a computer network having at least two users which are connected via a databus comprising at least two lines, which users each have a reception component and/or a transmission component, characterized in that, in order to monitor the function of the databus and/or of the users, at least one user (master) cyclically transmits an external error-detection signal (watchdog message, S_{WD}), in that the users (M, TlnA, TlnX) contain an error-recording device which emits an internal error-detection signal (CAN-error-interrupt, CEI) when the external error-detection signal (watchdog message, S_{WD}) is absent and in that consequently emergency operation measures (M1, M2) for setting defined emergency operation modes (single-wire emergency operation, special emergency operation) in the user (M, TlnA, TlnX) are taken.

2. Method according to Claim 1, characterized in that the external error-detection signal (watchdog signal, S_{WD}) emitted by the at least one user (master) is received during error-free operation by all the other users (M, TlnA, TlnX) within a prescribable time window.

3. Method according to Claim 1 or 2, characterized in that in the event of a static, global error which affects all the users and during which the lines (U-, U+) of the databus continuously assume their activated state (dominant level), the internal error-detection signal (CAN-error-interrupt, CEI) is emitted in each user.

4. Method according to Claim 1 or 2, characterized in that a dynamic, global error which effects all the users and in which the lines (U-, U+) of the databus continuously assume their activated state (recessive level) is detected during a data transmission, and in that, consequently, the internal error-detection signal (CAN-error-interrupt, CEI) is emitted in each user.

5. Method according to Claim 1 or 2, characterized in that in the case of a static error of the reception component of a user (M, TlnA, TlnX) its error-recording device is activated until the internal error-detection signal (CAN-error-interrupt, CEI) is emitted.

6. Method according to Claim 3 or 4, characterized in that the error-recording device is transferred into its initial state whenever an internal error-detection signal (CAN-error-interrupt, CEI) occurs.

7. Method according to one of Claims 4 to 6, characterized in that a frequency error [sic] which emits the error signal in the event of a prescribable error state is used as error-recording device.

8. Method according to Claim 7, characterized in that the error counter is reset and thus transferred into its initial state in that the user is reset and subsequently restarted.

9. Method according to one of the preceding claims, characterized in that in the event of an error of the transmission component of a user (M, TlnA, TlnX), the external error-detection signal (watchdog message, S_{WD}) of the master (M) is suppressed and as a result the emergency operation measures (M1, M2) are initiated.

10. Method according to one of the preceding claims, characterized in that in the event of an occurrence of the internal error-detection signal (CAN-error-interrupt, CEI) initially a first emergency operation measure (M1) for setting a first emergency operation mode (single-wire emergency operation) is initiated.

11. Method according to Claim 10, characterized in that in the event of error-free operation of the network after the first emergency operation mode (single-wire emergency operation) is set, this mode of operation is maintained.

12. Method according to Claim 10 or 11, characterized in that in the event of further error signals (watchdog signal; CEI) occurring after the first emergency operation mode (single-wire emergency operation) is set, the first emergency operation measure (M1) is rescinded and the second emergency operation measure (M2) is initiated in order to set the second emergency operation mode (special emergency operation).

13. Method according to Claim 12, characterized in that in the event of error-free operation after the second emergency operation mode (special emergency operation) is set, this mode of operation is maintained.

14. Method according to Claim 12, characterized in that in the event of the occurrence of a further external or internal error-detection signal (watchdog signal; CEI) after the second emergency operation mode (special emergency operation) is set, at least the defective user is switched off (bus-off) in the event of an error of the master and, in the event of a global error which effects all the users, all the users are switched off (bus-off).

15. Method according to Claim 14, characterized in that after an individual user is switched off (bus-off) the second emergency operation measure (M2) is rescinded.

16. Method according to Claim 14, characterized in that in the event of the user (master) which emits the external error-detection signal (watchdog signal) being switched off (bus-off), the error monitoring is switched off.

17. Method according to one of Claims 1 to 16, characterized in that in the event of an error which is already present in the quiescent state of the computer network the users synchronously initiate the emergency measures (M1, M2).

18. Method according to Claim 10, 12 or 17, characterized in that in the event of a local error which affects individual users a prescribable potential is connected, as a first emergency operation measure (M1) to the input terminal (RX0), assigned to the second line (U+) of the databus, of the user in question.

19. Method according to Claim 12 or 17, characterized in that in the event of a global error which effects all the users and/or in the event of an error of the master, a prescribable potential is connected, as a first emergency operation measure (M1), to the input terminals (RX0), assigned to the second line (U+) of the databus, of all the users, and all the users which have been reset by an internal error-detection signal (CEI) are restarted.

20. Method according to Claim 12, 13, 14 or 15 or 17, characterized in that, in the event of a local error which effects individual users, a prescribable potential is connected, as a second emergency operation measure (M2), to the input terminal (RX1), which is assigned to the second line (U-) of the databus, of the respective user, and the output terminal (TX1), which is assigned to the second line (U-), of the user is connected in such a way that no information can be transmitted on this line.

21. Method according to Claim 12, 13, 14, 15 or 17, characterized in that, in the event of a local error of the user (master) which emits the external error-detection signal (watchdog signal) and/or in the event of global errors which affect all the users, the second line (U-) is switched off by the master as a second emergency operation measure (M2), a prescribable potential is connected to the input terminal (RX1), which is assigned to the second line (U-) of the databus, of all the users, and the output terminals (TX1) which are assigned to the second line (U-), of all the users are connected in such a way that no information can be transmitted on this line.

## Revendications

1. Procédé de surveillance d'un réseau informatique ayant au moins deux participants reliés par un bus de données à au moins deux conducteurs, ces participants ayant chacun une partie de réception et/ou une partie d'émission, procédé caractérisé en ce que pour surveiller le fonctionnement du bus de données et/ou des participants, au moins un participant (maître) émet de manière cyclique un signal externe de détection de défaut (message de chien de garde S_{WD}), les participants (M, TlnA, TlnX) comportent une installation de détection de défaut qui, en cas de disparition du signal externe de reconnaissance de défaut (message de chien de garde, S_{WD}), émet un signal interne de détection de défaut (interruption d'erreur CAN, CEI) et met en oeuvre des mesures d'urgence (M1, M2) pour établir un mode de fonctionnement d'urgence défini (à un conducteur, en mode exceptionnel) dans les participants (M, TlnA, TlnX).

2. Procédé selon la revendication 1, caractérisé en ce que le signal de détection de défaut (signal de chien de garde S_{WD}) externe, émis par au moins un participant (maître), est reçu en cas de fonctionnement sans défaut par les autres participants (M, TlnA, TlnX) à l'intérieur d'une fenêtre de temps prédéterminée.

3. Procédé selon la revendication 1 ou 2, caractérisé en ce que pour un défaut global, stationnaire, concernant tous les participants et pour lequel les lignes (U+, U-) du bus de données prennent en permanence leur état activé (niveau dominant) dans chaque participant, on émet le signal interne de détection de défaut (interruption d'erreur CAN, CEI).

4. Procédé selon la revendication 1 ou 2, caractérisé en ce qu'un défaut global, dynamique, qui concerne tous les participants et pour lequel toutes les lignes (U-, U+) du bus de données prennent en permanence leur état activé (niveau récessif), est détecté par une transmission de données et qu'ensuite dans chaque participant il y a émission d'un signal de détection interne de défaut (interruption de défaut CAN, CEI).

5. Procédé selon la revendication 1 ou 2, caractérisé en ce que pour un défaut stationnaire de la partie de réception d'un participant (M, TlnA, TlnX) on active son installation de détection de défaut jusqu'à ce que le signal interne de détection de défauts soit fourni (interruption d'erreur CAN, CEI).

6. Procédé selon la revendication 3 ou 4, caractérisé en ce que pour chaque signal interne de détection de défaut (interruption d'erreur CAN, CEI) l'installation de détection de défaut est mise dans son état de sortie.

7. Procédé selon l'une des revendications 4 à 6, caractérisé en ce que l'installation de détection de défaut utilise un défaut de fréquence pour émettre un signal de défaut pour un état de défaut prédéterminé.

8. Procédé selon la revendication 7, caractérisé en ce que le compteur de défaut est remis à l'état initial et passe ainsi à son état de sortie dans lequel le participant est remis à l'état initial et redémarré.

9. Procédé selon l'une des revendications précédentes, caractérisé en ce que pour un défaut de la partie d'émission d'un participant (M, TlnA, TlnX), le signal de détection d'erreur externe (message de chien de garde S_{WD}) du maître (M) est supprimé, tandis qu'on met en oeuvre les mesures d'urgence (M1, M2).

10. Procédé selon l'une des revendications précédentes, caractérisé en ce qu'à l'arrivée du signal interne de détection de défaut (interruption d'erreur CAN, CEI), on met en oeuvre tout d'abord une première mesure d'urgence (M1) pour établir un premier mode d'urgence (mode d'urgence à un conducteur).

11. Procédé selon la revendication 10, caractérisé en ce qu'en cas de fonctionnement non défectueux du réseau, après mise en oeuvre du premier mode d'urgence (mode d'urgence à un conducteur), on conserve ce mode de fonctionnement.

12. Procédé selon la revendication 10 ou 11, caractérisé en ce qu'à l'arrivée d'autres signaux de défaut (signal de chien de garde, CEI), après passage au premier mode d'urgence (mode d'urgence à un fil), on supprime la première mesure d'urgence (M1) et on met en oeuvre la seconde mesure d'urgence (M2) pour établir le second mode d'urgence (mode exceptionnel).

13. Procédé selon la revendication 12, caractérisé en ce qu'en cas de fonctionnement sans défaut, après passage au second mode d'urgence (mode exceptionnel), on conserve ce mode de fonctionnement.

14. Procédé selon la revendication 12, caractérisé en ce qu'en cas d'arrivée d'un autre signal externe ou interne de détection d'erreur (signal de chien de garde ; CEI) après mise en oeuvre du second mode de fonctionnement d'urgence (mode exceptionnel) on coupe au moins le participant défectueux en cas de défaut du maître, et en cas de défaut global concernant tous les participants, on coupe tous les participants (coupure de bus).

15. Procédé selon la revendication 14, caractérisé en ce qu'après coupure (coupure de bus) d'un seul participant on supprime la seconde mesure d'urgence (M2).

16. Procédé selon la revendication 14, caractérisé en ce qu'en cas de coupure (coupure de bus) du signal externe de détection d'erreur (signal de chien de garde) du participant émetteur (maître) on coupe la surveillance de défaut.

17. Procédé selon les revendications 1 à 16, caractérisé en ce qu'en cas de défaut existant déjà pour l'état de repos du réseau informatique, les participants mettent en oeuvre les mesures d'urgence (M1, M2) de manière synchrone.

18. Procédé selon la revendication 10, 12 ou 17, caractérisé en ce que pour un tel défaut local concernant différents participants, comme première mesure d'urgence (M1) on met la borne d'entrée (RX0) associée à la seconde ligne (U+) du bus de données du participant concerné, à un potentiel prédéterminé.

19. Procédé selon les revendications 12 ou 17, caractérisé en ce que pour un défaut global concernant tous les participants et/ou pour un défaut du maître, comme première mesure d'urgence (M1) on met les bornes d'entrée (RX0) de tous les participants, associées à la seconde ligne (U+) du bus de données, à un potentiel prédéterminé, et l'on redémarre tous les participants remis à l'état initial par un signal interne de détection de défaut (CEI).

20. Procédé selon la revendication 12, 13, 14 ou 15 ou 17, caractérisé en ce que pour un défaut local concernant un participant, comme seconde mesure d'urgence (M2) on applique à la borne d'entrée (RX1) du participant concerné, borne associée à la seconde ligne (U-) du bus de données, un potentiel prédéterminé, la borne de sortie (TX1) du participant, associée à la seconde ligne (U-) étant commutée pour qu'elle ne puisse fournir aucune information à cette ligne.

21. Procédé selon la revendication 12, 13, 14, 15 ou 17, caractérisé en ce que pour un défaut local du participant émettant le signal externe de détection de défaut (signal de chien de garde) (maître) et/ou pour un défaut global concernant tous les participants, comme seconde mesure d'urgence (M2), le maître coupe la seconde ligne (U-) qui relie la borne d'entrée (RX1) de tous les participants associée à la seconde ligne (U-) du bus de données, à un potentiel prédéterminé, et commute les bornes de sortie (TX1) de tous les participants, bornes associées à la seconde ligne (U-), pour qu'aucune information ne puisse être fournie à cette ligne.
